(19) Europäisches Patentamt
European Patent Office
Office européen des brevets

(11) **EP 4 718 842 A1**

(12) **EUROPEAN PATENT APPLICATION**

(43) Date of publication:
**01.04.2026   Bulletin 2026/14**

(21) Application number: **24306606.5**

(22) Date of filing: **30.09.2024**

(51) International Patent Classification (IPC):
**H04N 19/115** (2014.01)     **H04N 19/14** (2014.01)
**H04N 19/156** (2014.01)

(52) Cooperative Patent Classification (CPC):
**H04N 19/115; H04N 19/14; H04N 19/156**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **AUMONT, Franck
35770 VERN SUR SEICHE (FR)**
• **HOUSSAINY, Hadi
35700 RENNES (FR)**
• **LE MEUR, Olivier
35160 TALENSAC (FR)**
• **REDMANN, William
GLENDALE, 91205 (US)**

(74) Representative: **Vossius & Partner
Patentanwälte Rechtsanwälte mbB
Siebertstraße 3
81675 München (DE)**

(54) **AI BASED ENERGY AWARE BITRATE LADDER**

(57)    Systems, methods, and instrumentalities may be configured for an artificial intelligence (AI) based energy aware bitrate ladder. In examples, a computing device may determine tuples associated with a video, wherein each tuple includes a respective image resolution and a respective bitrate associated with the video. The computing device may predict, using an energy prediction machine learning (ML) model, a respective energy consumption associated with providing the video to a receiving device at the image resolution and the bitrate included in each of the tuples. The computing device may select one or more tuples from the tuples based at least on the respective energy consumptions predicted for the tuples. The computing device may convey information regarding the one or more selected tuples to a video encoder.

**FIG. 13**

## Description

### BACKGROUND

Video coding systems may be used to compress digital video signals, for example, to reduce the storage and/or transmission bandwidth needed for such signals. Video coding systems may include, for example, wavelet-based systems, object-based systems, and/or block-based systems, such as a block-based hybrid video coding system. In extended reality applications, the mechanisms for providing control of degree of freedom boundaries may not be adequate.

### SUMMARY

Systems, methods, and instrumentalities may be configured for an artificial intelligence (AI) based energy aware bitrate ladder. In examples, a computing device may determine tuples associated with a video, wherein each tuple includes a respective image resolution and a respective bitrate associated with the video. The computing device may predict, using an energy prediction machine learning (ML) model, a respective energy consumption associated with providing the video to a receiving device at the image resolution and the bitrate included in each of the tuples. The computing device may select one or more tuples from the tuples based at least on the respective energy consumptions predicted for the tuples. The computing device may convey information regarding the one or more selected tuples to a video encoder.

The video encoder may reside on the computing device or a separate device configured to encode the video. The respective energy consumption predicted for each of the tuples may include a first energy consumption and a second energy consumption. The first energy consumption associated with a first function may be performed during the provision of the video. The second energy consumption may be associated with a second function performed during the provision of the video.

The first function may be associated with encoding the video at the image resolution and the bitrate included in each of the tuples, and the second function may be associated with decoding the video at the image resolution. The bitrate may be included in each of the tuples. The respective energy consumption predicted for each of tuples may be determined as a sum or a weighted sum of at least the first energy consumption and the second energy consumption.

The computing device may determine respective weights applied to the first energy consumption and the second energy consumption. Each of the multiple tuples may indicate a respective encoding technique or a respective decoding technique associated with the provision of the video. The computing device may predict the respective energy consumption associated with each of the tuples further based on the respective encoding technique or the respective decoding technique indicated by each of the tuples.

The computing device may determine content features associated with the video and predict the respective energy consumption associated with each of the tuples further based on the content features. The computing device may determine a respective quality metric associated with each of the tuples and select the one or more tuples from the tuples based further on the respective quality metric associated with each of the tuples.

The computing device may determine the respective quality metric associated with each of the tuples using an ML model trained for making the determination based at least on the respective image resolution and the respective bitrate associated with each of the tuples. The computing device may select the one or more tuples from the tuples based on a determination that the respective energy consumption predicted for each of the one or more tuples satisfies an energy reduction rate.

The computing device may determine that the one or more tuples satisfy the energy reduction rate based on energy consumptions associated with the one or more tuples at different points in time, based on respective maximum energy consumptions associated with the same image resolutions as those included in the one or more tuples, based on a sorted list or a distribution of energy consumptions associated with the same image resolutions as those included in the one or more tuples, or based on a just-noticeable-difference (JND) associated with the respective energy consumptions predicted for the one or more tuples.

Each feature disclosed anywhere herein is described, and may be implemented, separately/individually and in any combination with any other feature disclosed herein and/or with any feature(s) disclosed elsewhere that may be impliedly or expressly referenced herein or may otherwise fall within the scope of the subject matter disclosed herein.

### BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 is a diagram showing an example video encoder.

FIG. 3 is a diagram showing an example of a video decoder.

FIG. 4 is a diagram showing an example of a system in which various aspects and examples may be implemented.

FIG. 5 illustrates an example of an overall system for dynamic adaptive streaming over HTTP (DASH).

FIG. 6 is an example of a media presentation description (MPD) extensible markup language (XML) file.

FIG. 7 illustrates an example HTTP adaptive streaming (HAS) server system architecture.

FIG. 8 illustrates an example HAS client system architecture.

FIG. 9 illustrates an example energy aware HAS Server system architecture.

FIG. 10 illustrates an example convex hull construction.

FIG. 11 illustrates a quality artificial intelligence (AI) regression model.

FIG. 12 illustrates an example predicted perceptual quantizer (PQ) Y peak signal to noise ratio (PSNR) for an example video codec for a representation.

FIG. 13 illustrates an energy AI regression model.

FIG. 14 illustrates an example estimation of encoding energy consumption for codecs in mWatts.

FIG. 15 illustrates examples of an energy aware bitrate ladder.

FIG. 16 illustrates an example energy pruning Globalenergy_Method algorithm.

FIG. 17 illustrates an example energy pruning PerResolutionMaxenergyThreshold_Method algorithm.

FIG. 18 illustrates an example energy pruning PerResolutionCumulatedThreshold_Method algorithm.

FIG. 19 illustrates an example energy pruning PerResolutionQuantileThreshold_Method algorithm.

FIG. 20 illustrates an example energy pruning JND_Method algorithm.

FIG. 21 illustrates an energy vs quality gain comparison between MET, CT and QT methods.

## DETAILED DESCRIPTION

A detailed description of illustrative embodiments will now be described with reference to the various Figures. Although this description provides a detailed example of possible implementations, it should be noted that the details are intended to be exemplary and in no way limit the scope of the application.

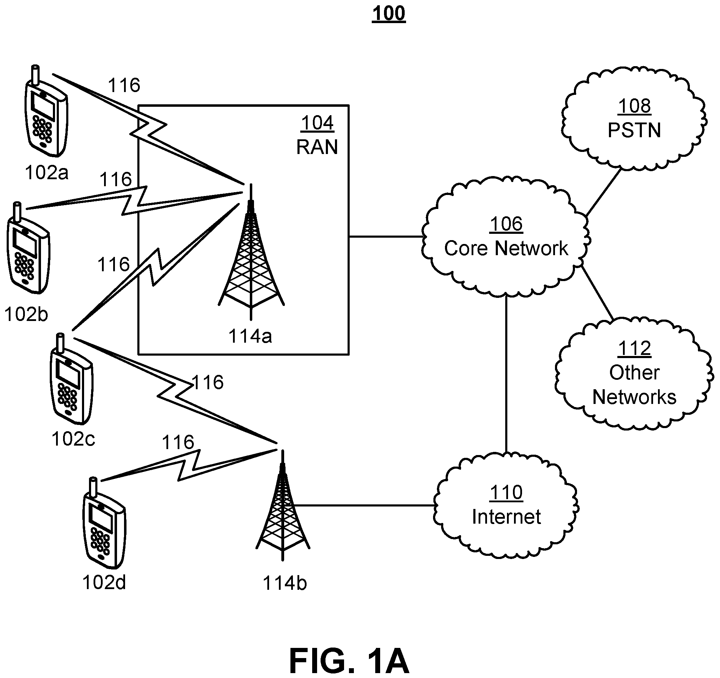

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a WTRU.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

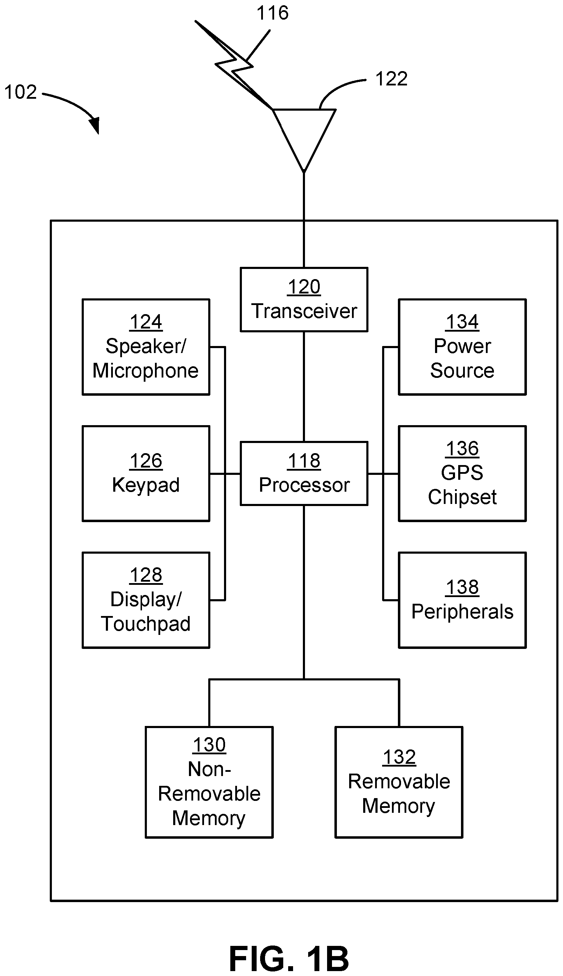

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

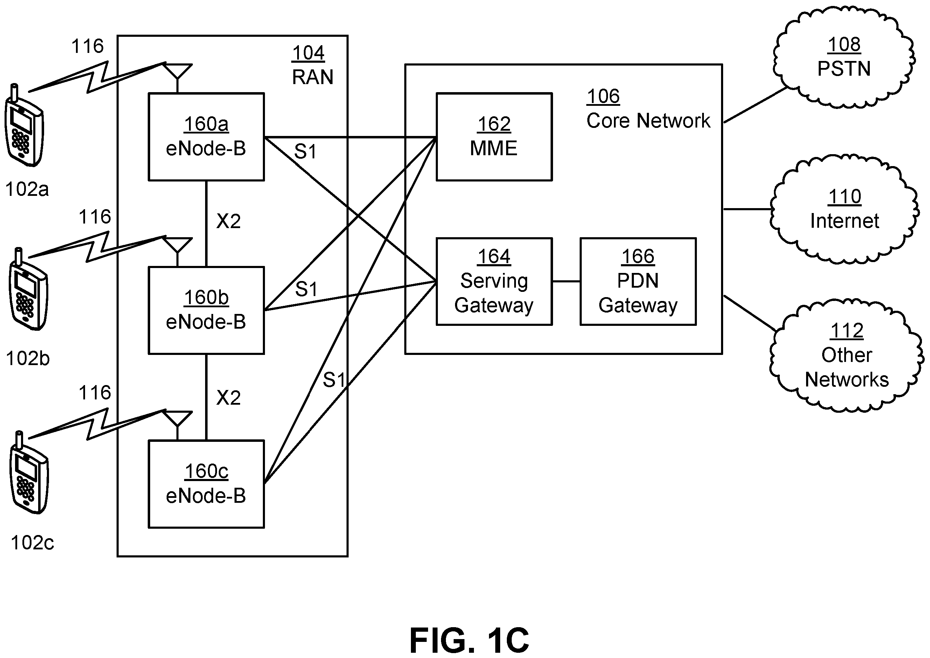

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements is depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11 ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

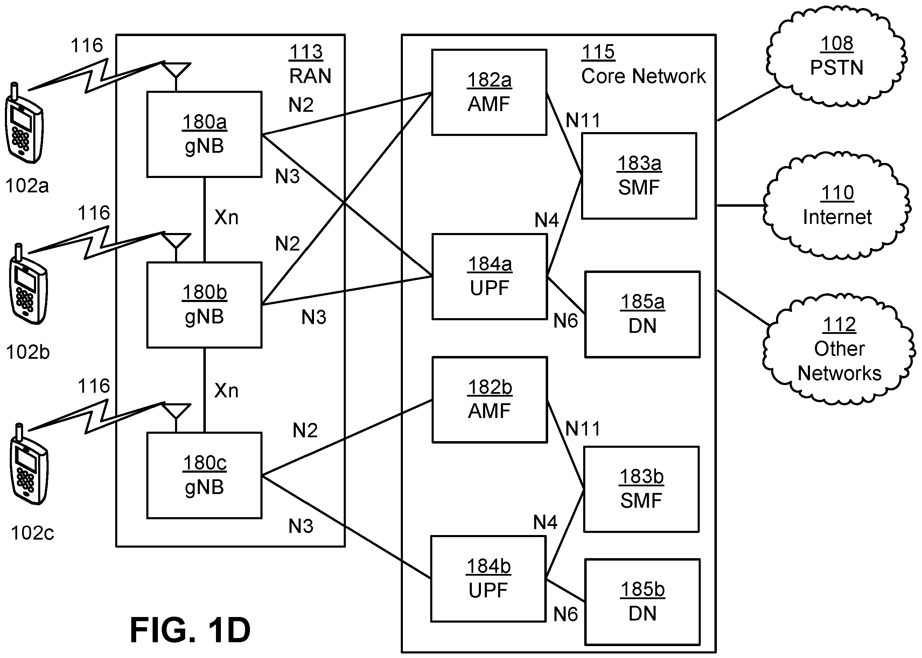

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating WTRU IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b, and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may perform testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples or embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

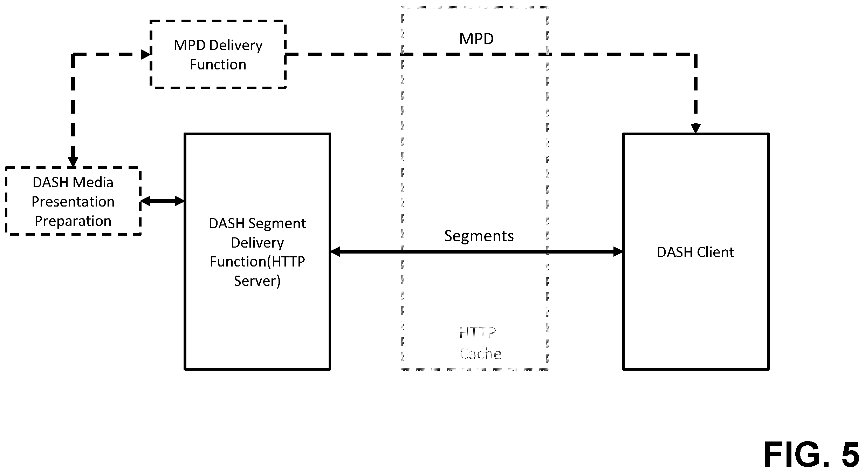

The aspects described and contemplated in this application may be implemented in many different forms. FIGS. 5-23 described herein may provide some embodiments, but other embodiments are contemplated. The discussion of FIGS. 5-23 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

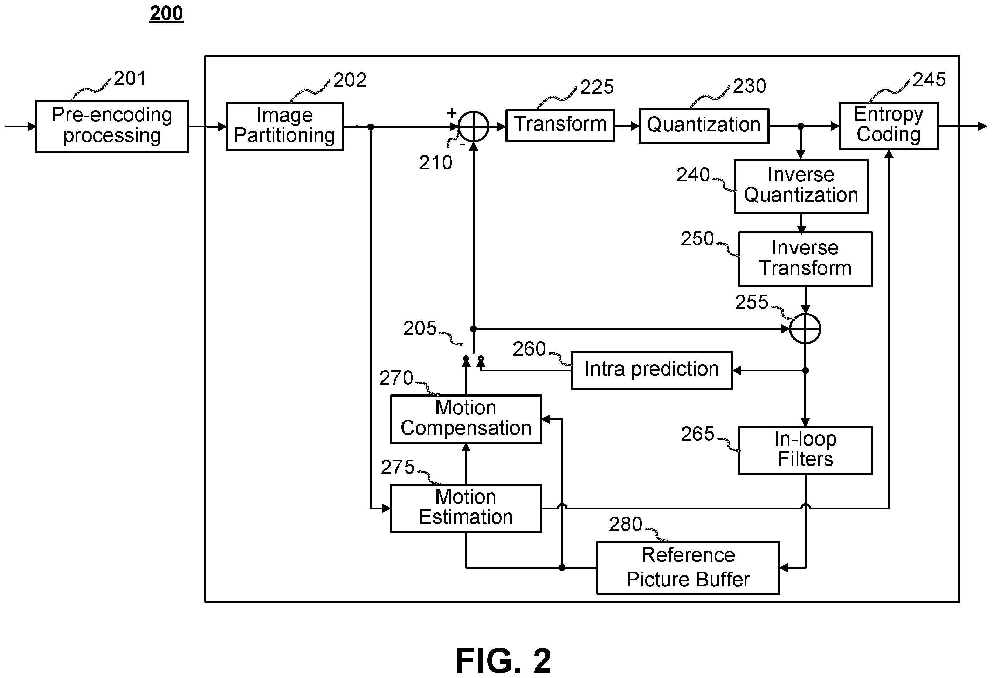

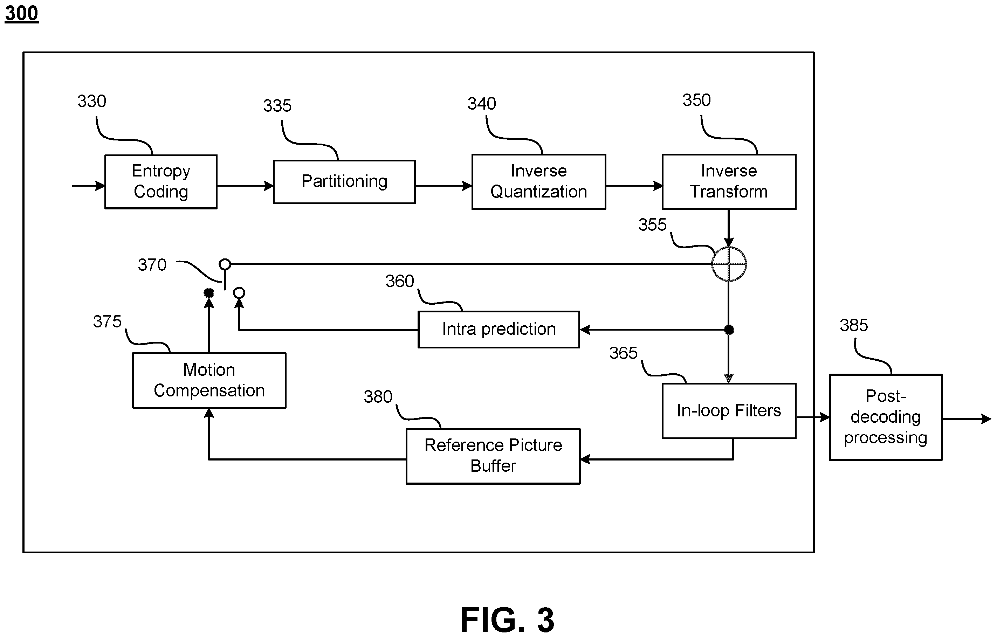

Various methods and other aspects described in this application may (for example, be used to) modify modules, for example, pre-encoding processing 201, intra prediction 260, entropy coding 245 and/or entropy decoding modules 330, intra prediction 360, post-decoding processing 385 of a video encoder 200 and a video decoder 300 as shown in FIG. 2 and FIG. 3 respectively. Moreover, the subject matter disclosed herein presents aspects that are not limited to VVC or HEVC, and may be applied, for example, to any type, format or version of video coding, whether described in a standard or a recommendation, whether pre-existing or future-developed, and extensions of any such standards and recommendations (e.g., including VVC and HEVC). Unless indicated otherwise, or technically precluded, the aspects described in this application may be used individually or in combination.

Various numeric values are used in examples described the present application, such as minimum and maximum value ranges (for example, 0 to 1, 0 to N or 0 to 255), bit values for indications or determinations, default values, ID numbers (for example, for adaptation IDs), etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 may also generally perform video decoding as part of encoding video data. For example, the encoder 200 may perform one or more of the video decoding steps presented herein. The encoder reconstructs the decoded images, for example, to maintain synchronization with the decoder with respect to one or more of the following: reference pictures, entropy coding contexts, and other decoder-relevant state variables.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

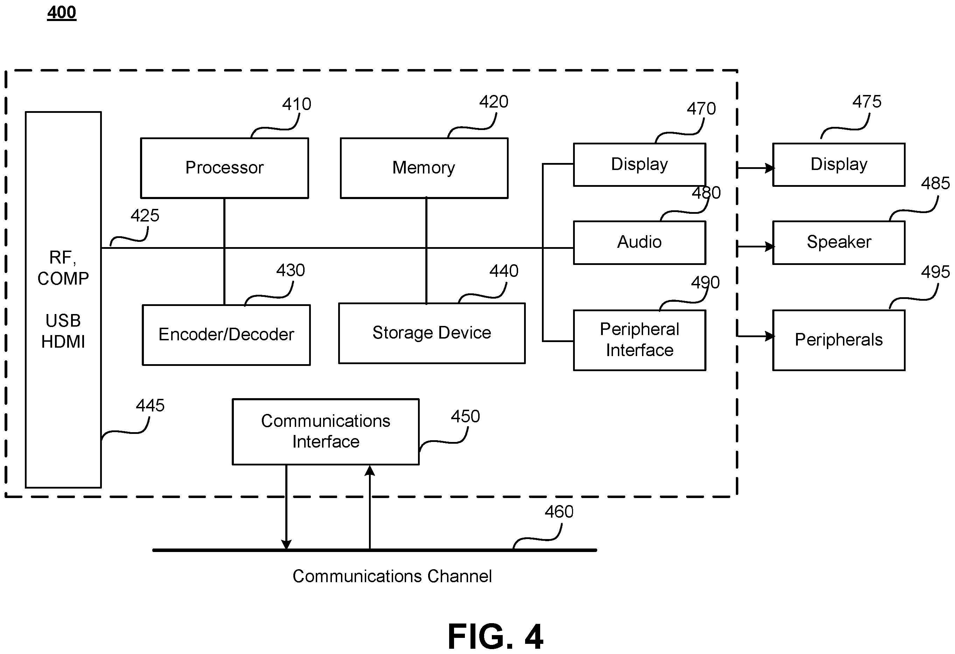

FIG. 4 is a diagram showing an example of a system in which various aspects and embodiments described herein may be implemented. System 400 may be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various embodiments, the system 400 is communicatively coupled to one or more other systems, or other electronic devices, via, for example, a communications bus or through dedicated input and/or output ports. In various embodiments, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various embodiments, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 410 and/or the encoder/decoder module 430 is used to store instructions and to provide working memory for processing that is needed during encoding or decoding. In other embodiments, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as, for example, MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various embodiments, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the data stream as necessary for presentation on an output device.

Various elements of system 400 may be provided within an integrated housing. Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various embodiments, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these embodiments is typically connected to an access point or router that provides access to external networks including the Internet for allowing streaming applications and other over-the-top communications. Other embodiments provide streamed data to the system 400 using a set-top box that delivers the data over the HDMI connection of the input block 445. Other embodiments provide streamed data to the system 400 using the RF connection of the input block 445. As indicated above, various embodiments provide data in a non-streaming manner. Additionally, various embodiments use wireless networks other than Wi-Fi, for example a cellular network or a Bluetooth network.

The system 400 can provide an output signal to various output devices, including a display 475, speakers 485, and other peripheral devices 495. The display 475 of various embodiments includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples of embodiments, one or more of a stand-alone digital video disc (or digital versatile disc) (DVR, for both terms), a disk player, a stereo system, and/or a lighting system. Various embodiments use one or more peripheral devices 495 that provide a function based on the output of the system 400. For example, a disk player performs the function of playing the output of the system 400.

In various embodiments, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various embodiments, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various embodiments in which the display 475 and speakers 485 are external components, the output signal may be provided via dedicated output connections, including, for example, HDMI ports, USB ports, or COMP outputs.

The embodiments may be carried out by computer software implemented by the processor 410 or by hardware, or by a combination of hardware and software. As a non-limiting example, the embodiments may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further embodiments, in one example "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, such as syntax elements that may be indicated in discussion or figures presented herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

During the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment," "an embodiment," "an example," "one implementation" or "an implementation," as well as other variations thereof, means that a particular feature, structure, characteristic, and so forth described in connection with the embodiment is included in at least one embodiment. Thus, the appearances of the phrase "in one embodiment," "in an embodiment," "in an example," "in one implementation," or "in an implementation", as well any other variations, appearing in various places throughout this application are not necessarily all referring to the same embodiment or example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in some embodiments the encoder signals (e.g., to a decoder) an MPD, adaptation set, a representation, etc. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Encoding and/or decoding tasks in the video chain over a fixed or mobile network in an adaptative streaming context may be described herein. Features described here may be related to communications systems for video streaming that aim to provide signaling mechanisms to enable a device to control the energy usage and/or the rendered video quality in the context of adaptative streaming (e.g., MPEG-dynamic adaptive streaming over HTTP (DASH)) on a device (e.g., a desktop or laptop computer, a smartphone, a tablet, a set-top box, or a television connected to the internet).

Reducing the carbon footprint and/or energy consumption of electronic devices has become a requirement not only for electronic devices manufacturers, but also as a way to limit, as much as possible, environmental impact(s) and to contribute to the emergence of sustainable video streaming.

The increase of video streaming services has brought about a corresponding increase in energy requirements for devices. Examples of increases in video streaming services include multiple resolution(s) (e.g., from SD to HD to 4K and soon to 8K and beyond), the number of delivery functions (e.g., pre-processing, upscaling, downscaling, encoding, transcoding, distribution, decoding, rendering, and/or the like), the number of codecs, the number of different end user device profiles, and/or the number of video format(s) (e.g., high dynamic range versus standard dynamic range). Increased energy requirements may not be consistent with the global need to reduce energy consumption and/or reduce the energy consumption of playback devices (e.g., while still maintaining a high Quality of Experience (QoE)).

HyperText transfer protocol (HTTP) adaptive streaming (HAS) may be increasingly adopted by OTT-based video streaming services because HAS may allow clients (e.g., a HAS client) to dynamically switch among one or more stream representations selected from a bitrate and/or resolution ladder. An approach for the client may be to select a representation considering its downlink bandwidth condition and/or its resolution to preserve its QoE. The bitrate ladder may be generated using one or more (e.g., several) approaches. For example, the bitrate ladder may be generated using a static approach that considers a set of bitrate/resolution pairs for a video (e.g., all the videos, whatever the content). For example, the bitrate ladder may be generated using an approach of intensive encoding of resolutions over a bitrate range (e.g., encoding all resolutions over a wide bitrate range) to construct the convex hull. For example, the bitrate ladder may be generated using an approach using a machine learning content-based prediction (e.g., without performing an exhaustive search).

One or more (e.g., any) of these approaches may consider their energy consumption and/or their carbon footprint. These approaches are used for video service streaming, which may represent nearly 80% of the Information and Communication Technology (ICT) traffic. A question may be raised to know how to reduce the energy consumption required to transmit an asset (e.g., video asset) of a video service, from the post-production up to the renderer of the end user device with these approaches (e.g., globally or per streaming chain function to adapt the end user device strategy when the user device selects a representation).

Features described herein may aim to improve DASH by proposing systems, devices, and/or methods to generate an energy aware bitrate ladder (e.g., at the server side). Features described herein may signal an energy aware bitrate ladder by an energy aware media presentation description (MPD) manifest file with a reduced number of energy aware representations optimizing the perceptual quality for the end-user.

MPD files may be a manifest file for MPEG DASH streaming. A manifest file may include information and/or a parameter for the video streaming (e.g., such as codec, adaptive bit rate (ABR) and resolution of the video). The MPD may include a description of the resources forming a streaming service (e.g., that a DASH client uses to determine which assets to request, to perform adaptive streaming of the content).

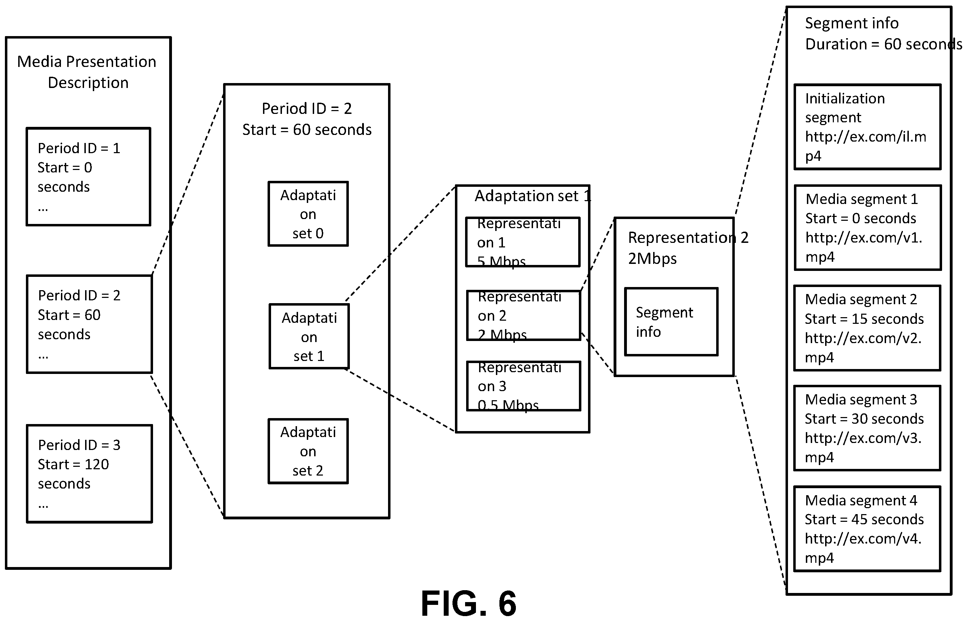

Although features described herein may be based on DASH, one or more features may be generalized to another solution (HLS, and/or the like). The HAS (e.g., DASH) may enable delivery of continuous media content from a (e.g., standard) HTTP server to HTTP clients and/or enable caching of content by a (e.g., standard) HTTP cache. HAS may allow the highest visual quality while influenced by one or more factors such as network bandwidth, display resolution, and/or viewing conditions. FIG. 5 illustrates an example of an overall system for DASH. FIG. 6 is an example of an (e.g., typical) MPD XML file.

HAS may be increasingly adopted by OTT-based video streaming services because HAS may allow clients to dynamically switch among one or more stream representations signaled in an MPD manifest file. HAS may allow clients to reach the optimal (e.g., best) QoE.

A representation (e.g., each of these representations) may be encoded to target a (e.g., specific) bitrate providing a wide range of operating bitrates known as the bitrate ladder. One or more (e.g., several) approaches with different levels of complexity may be (e.g., currently) used to build a bitrate ladder including: a fixed bitrate ladder, a complex bitrate ladder, a machine learning content-based ladder, and/or a minimized encoding latency bitrate ladder. A fixed bitrate ladder may be a set of bitrate resolution pairs (e.g., called "one-size-fits-all"). A complex bitrate ladder may be based on the intensive encoding of resolutions over a wide bitrate range to construct a convex-hull. A machine learning content-based ladder may be based on the optimization of the bitrate range by analyzing the content and/or determining the optimal (e.g., best) quality versus the bitrate. A minimized encoding latency bitrate ladder may be based on the encoding latency.

Bitrate ladders may be configured to (e.g., may permit to) offer the optimal (e.g., best) end-user QoE (e.g., higher Bjontegaard Delta-Bit Rate (BD-BR), video stalling limitation, and/or the like), an optimization of the network bandwidth usage (e.g., bitrate budget reduction for a service), and/or the minimization of the encoding latency to reduce the energy required for encoding. In examples, reducing energy may not take into account overall energy consumption of the video streaming chain.

Energy consumption may be reduced by limiting the encoding latency. The video resolution per HAS segment may be adapted and, for example, may not manage the (e.g., real) energy consumption of the overall chain, or per function of the chain. The bit rate ladder signaled to the end-user device may not be adapted (e.g., may not be allowed to be adapted) to let the end-user device to select a representation of a video service with less impact (e.g., in terms of energy consumption and carbon footprint).

Features described herein may be associated with the server side. The energy consumption of the overall adaptative streaming chain (e.g., from the content provider up to the end-user device) may be enabled when the end-user device is connected to a media service and is playing at least one media asset representation (e.g. video asset) of this service.

At the server side, the estimation of the energy consumption may be used in addition to the resolution, the bit rate, and the quality, in order to generate an energy aware bitrate ladder, which may be signaled in the Media Presentation Descriptor (MPD) manifest file published on the CDN for being requested by the end-user device.

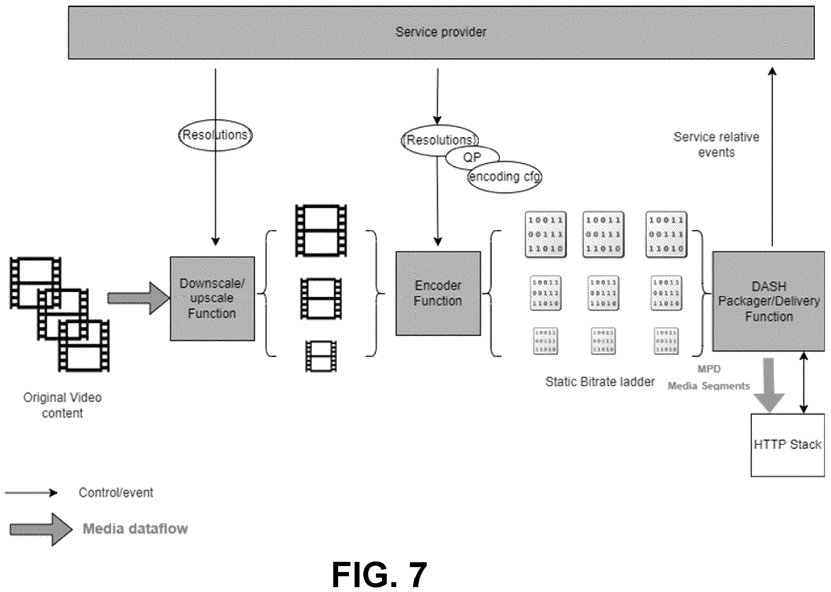

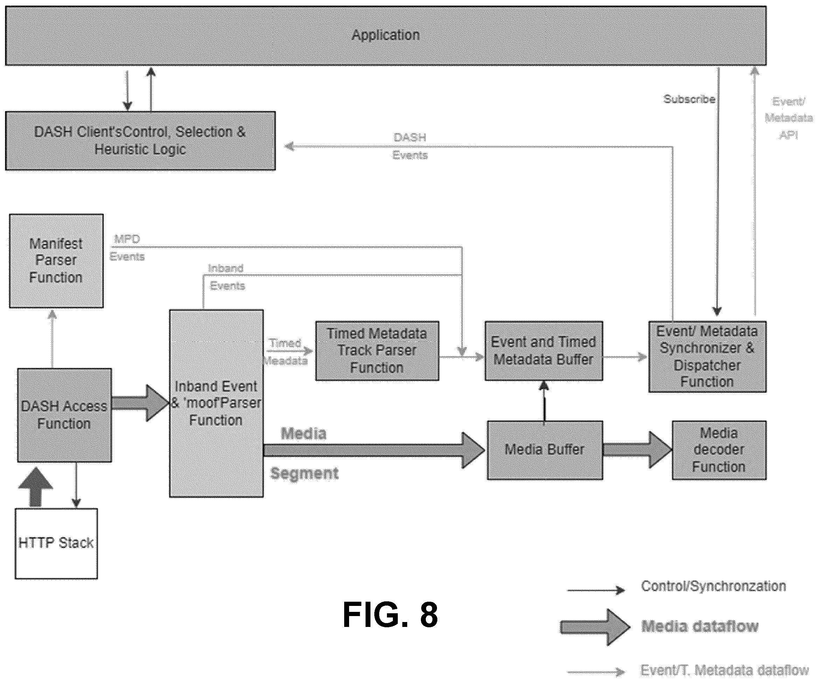

FIG. 7 and FIG. 8 illustrate an example system architecture of dynamic adaptive streaming over HTTP (HAS) at the server and client side respectively. FIG. 7 illustrates an example HAS server system architecture. FIG. 8 illustrates an example HAS client system architecture. The example architecture may enable delivery of continuous media content from servers to clients and enable caching (e.g., without energy consumption over the chain).

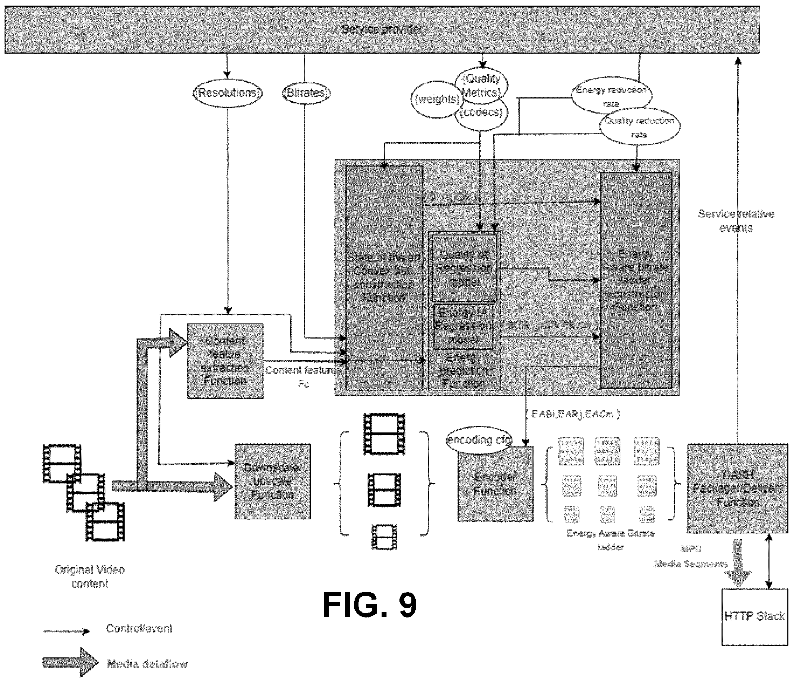

FIG. 9 illustrates an example energy aware HAS Server system architecture. A content feature analysis of the video received from the content provider may be performed. The content analysis may be used to determine the spatial and temporal complexity features of the video (e.g., per frame, scene, cuts, etc.). The generated video content features may be used to adapt dynamically the convex hull and estimate video quality and energy of a tuple {bitrate, resolution, quality} using machine-learning-based models.

The content features $F_c$ may be transmitted to the machine-learning-based models used to estimate energy consumption and video quality and to the convex hull construction function to create the convex hull. The content features $F_c$ may be extracted by using a video complexity analyzer (VCA) algorithm art convex hull construction function.

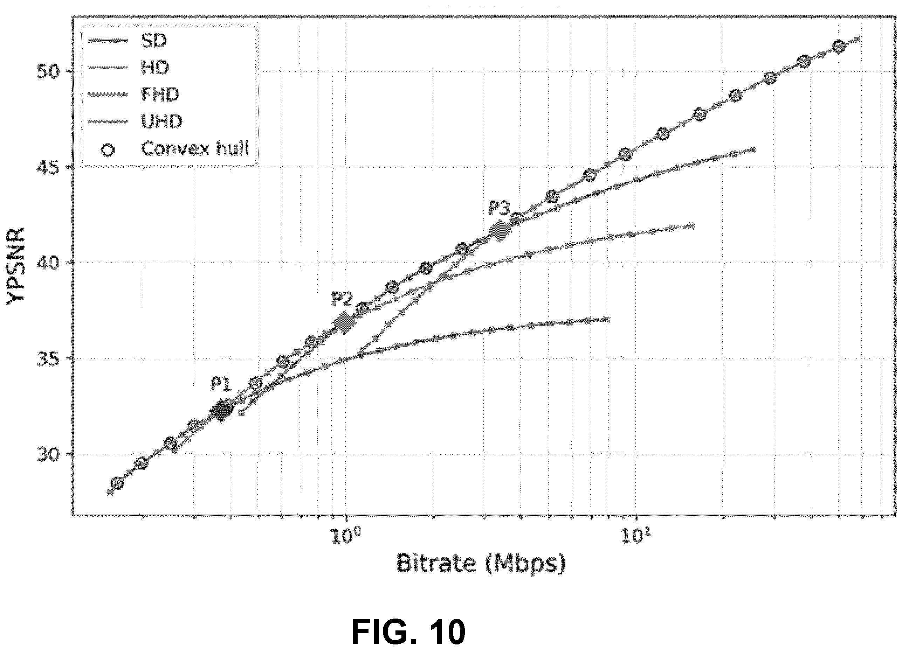

FIG. 10 illustrates an example convex hull construction. The convex hull construction may be an HTTP adaptive streaming (HAS) method that be utilized to optimize the tuple {bit rate, resolution, quality} as shown in FIG. 10.

The convex hull may be where the encoding point achieves Pareto efficiency. The convex hull may allow to select one resolution over another if a higher resolution does improve the quality for the same value of the bitrate. The convex hull may allow to reduce the number of candidates in the bitrate ladder.

The convex hull constructor may estimate the quality of the video when a bitrate-resolution pair is selected. In an example convex hull bitrate ladder, the quality metric may be Y-PSNR. The output of the function may be the tuple {$B_i$, $R_j$, $Q_k$}. In the tuple and as described herein, k may be $k = \{B_i, R_j\}$ or $k = \{B_i, R_j, C_m\}$ (e.g., if multiple codecs are used to create the bitrate ladder).

Features described herein may be associated with an energy prediction function. A function to predict the energy consumption of an example (e.g., overall) adaptative streaming chain for a representation may be provided herein (e.g., tuple {$B_i$, $R_j$}). The function may take as inputs the content features $F_c$, the convex hull the quality metrics, a list of codecs, function weights $w_{f_{\theta l}}$, and an energy and quality reduction rate.

For a tuple {$B_i$, $R_j$}, the global distribution energy consumption $E_G$ may be estimated using a regression model per distribution function (e.g., the elements of the video chain such as encoding, decoding, pre-processing, etc.) The AI-based models may be trained by field data.

The output value of the energy prediction function is given by the following equation:

$$E_G = \sum_{l=1}^{N} w_{f_{\theta l}} \times E_{f_{\theta l}}$$

where N is the number of functions of the distribution chain. $w_{f_{\theta l}}$ may allow to give influence to functions $f_{\theta l}$ (e.g., elements of the video chain) on the result of the global energy.

The output may be a vector including the energy value per distribution function. The function may use the list of the codecs to optimize the value of the distribution energy consumption by replacing the codec of the convex hull by another, keeping the same level of quality. The quality is estimated using a quality AI regression model. The initial representation may be replaced by the updated representation.

The energy-aware bitrate ladder function may output an updated convex hull bitrate ladder $\{B'_i, R'_j, Q'_k, E_k\}$ or

$$\left\{ B'_i, R'_j, Q'_k, V_k \left( E_{f_{\theta^l}} \right)_{l \in \{1...N\}} \right\}$$ when energy is provided per distribution function (e.g., a vector of energy values). If the energy reduction rate parameter value is 0, the computing of the energy may not be performed, and the $E_k$ value of the

tuple $\{B'_i, R'j, Q'_k, E_k\}$, or the values of the $V\left( E_{f_{\theta^l}} \right)$ may be set to 0. The energy reduction rate may be set to zero, indicating no reduction in energy consumption. For example, energy savings may not be applicable, without imposing any energy constraints. By enabling the energy reduction rate to be zero, the system may provide flexibility in energy management, where maintaining operational performance is prioritized over energy efficiency.

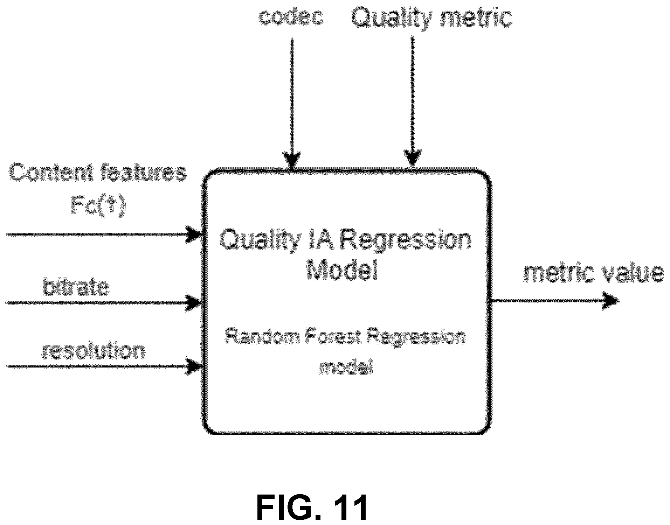

FIG. 11 illustrates a quality AI regression model. The quality AI regression model may be, for example, a random forest regression based model which has been trained with bitrate, resolution, content feature values $F_c$, the codec type, and the quality metric selected by the service provider, as shown on FIG. 11. The quality AI regression model may be represented as follows:

$$Q = QualityModel(F_c | bitrate, resolutnio, codec, quality\ metric)$$

In examples, the system may allow for adaptation of energy consumption based on the number of devices with larger displays. For example, the service provider may modify the energy distribution by increasing the weight assigned to the rendering function for devices with larger displays.

In examples, the system may use an equation representing a sum of weighted components. If the service provider is not to consider encoding energy in the overall energy calculation, the weight for the component may be set to zero. If rendering on a display is to have more significance, a higher weight may be selected for the rendering function, for example, to increase its influence on the global energy computation.

The system may allow for the dynamic modification of the weights during an HAS period. For example, adjustments may be made based on audience metrics and the types of devices receiving the video content.

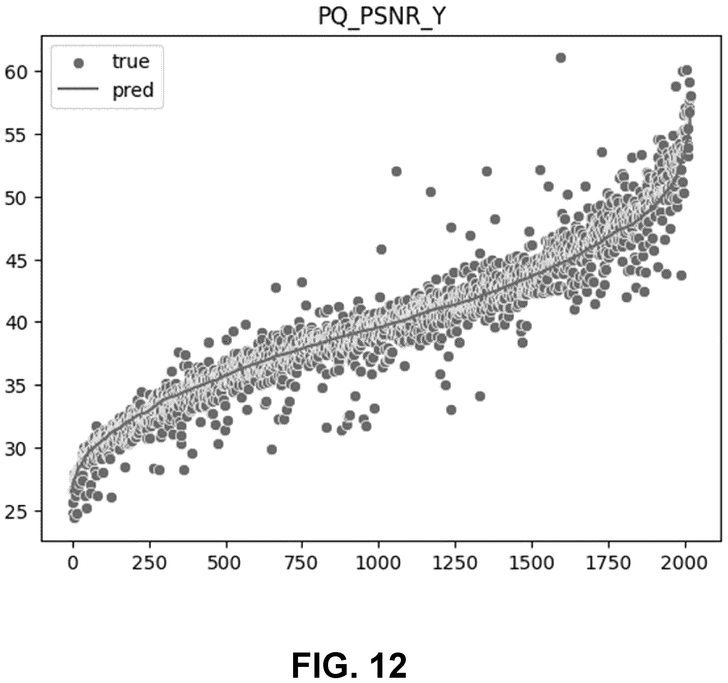

FIG. 12 illustrates an example of predicted perceptual quality (PQ) for luminance (Y) PSNR for a codec (e.g., a AVC, HEVC, VVC codec) for a representation (e.g., a representation associated with a particular resolution). An example of the output of the model is shown in FIG. 12. Various examples for different codecs and resolutions may be provided.

The model may be used by the convex hull construction function to select the best tuple (e.g., bitrate, resolution, codec) by maximizing the value of the quality metric selected by the service provider (e.g., YPSNR, M-SSIM, etc.).

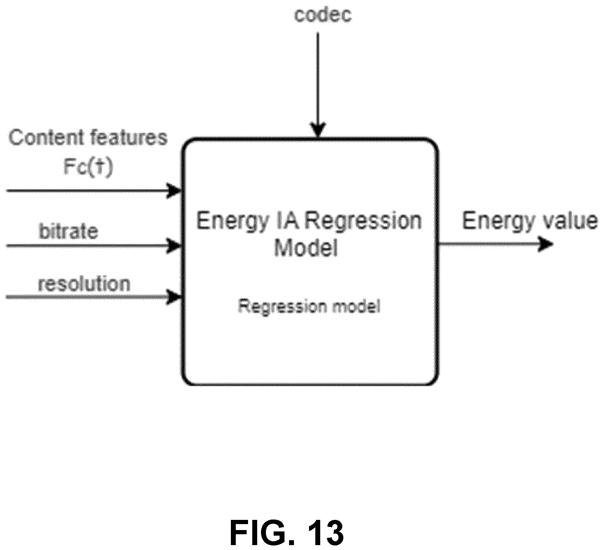

FIG. 13 illustrates an energy AI regression model. An energy AI regression model may be used for an element of the video chain. The energy AI regression model may be a regression based model which has been trained with bitrate, resolution, and content feature values $F_c$ and codec type, as shown in FIG. 13, which may be as follows:

$$E_{f_{\theta^l}} = f_l(F_c | bitrate, resolution, codec)$$

N (e.g., number of elements in the distribution chain) energy AI regression models may predict the energy consumption of each distribution function of the HAS system.

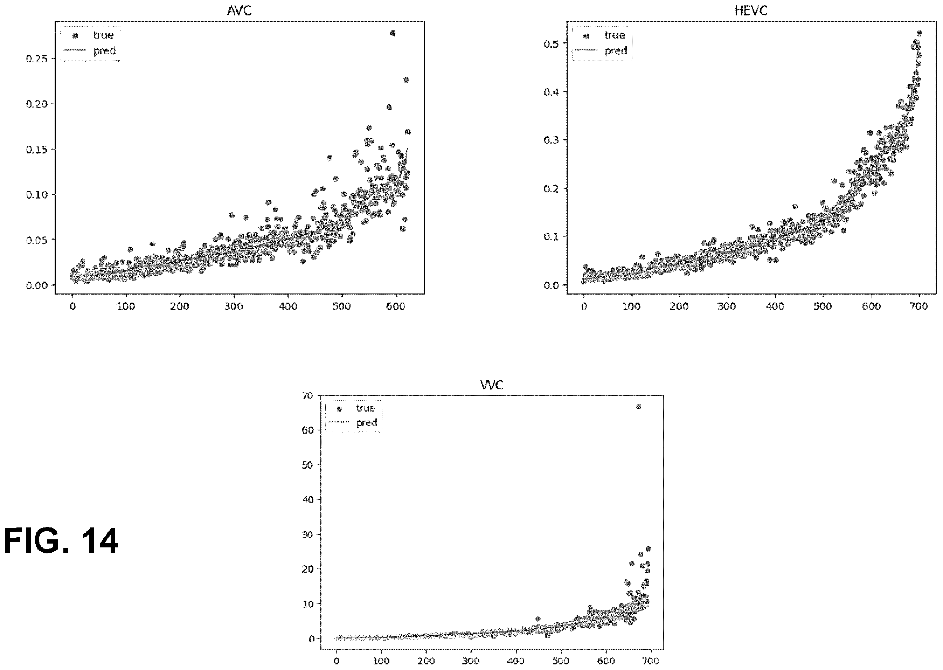

FIG. 14 illustrates an example estimation of encoding energy consumption for codecs in mWatts. For example, FIG. 14 illustrates the energy consumption prediction for the encoding function for different bitrates and video codecs.

Features described herein may be associated with an energy aware bitrate (EAB) ladder constructor function.

A function may adapt a convex hull bitrate ladder (e.g., the bitrate-resolution pairs $\{B_i, R_j\}$) to consider the energy parameter per representation). The bitrate-resolution pairs may be skipped from the bitrate ladder. As illustrated by FIG. 9, the inputs of this function may be the tuples $\{B'_i, R'_j, Q'_k, E_k, C_m\}$ or $\{B_i, R_j, Q_k\}$ and the energy reduction rate and the quality reduction rate (e.g., global or per resolution).

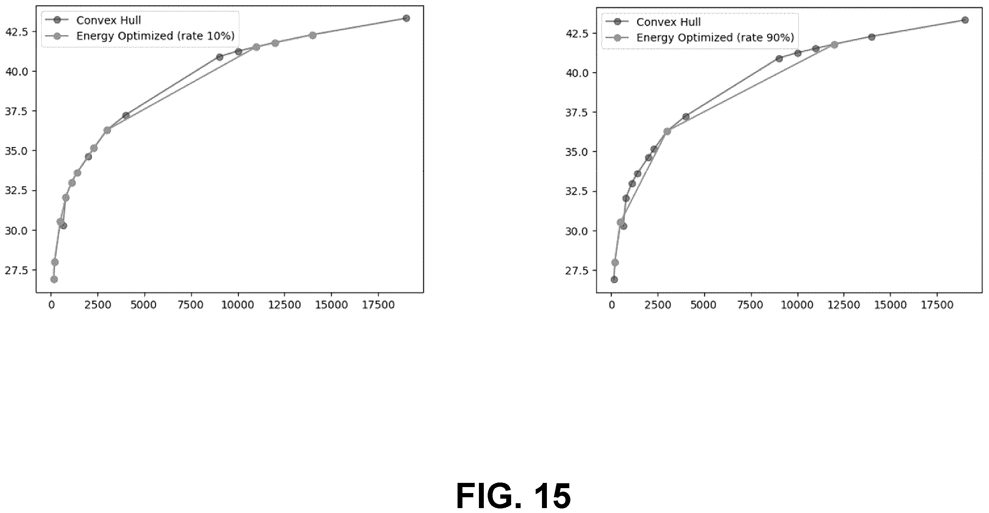

FIG. 15 illustrates examples of an energy aware bitrate ladder (e.g., energy reduction rate = 10% and 90%). The function may use the energy reduction rate and/or quality reduction rate (e.g., given by the service provider) to perform a pruning of the convex hull bitrate ladder. The pruning may skip (e.g., aim to skip) bitrate-resolution representations with an objective of energy reduction while maximizing the quality, as shown in FIG. 15.

The output of the pruning operation may be the energy-aware bitrate ladder composed of the tuple $\{EAB_i, EAR_j, EAC_m\}$. The bitrate tuple may be transmitted to the encoder function to create the representation bitstreams and the HAS package to allow the distribution of the service assets up to the client: $EAB_i$ represents the $i^{th}$ bitrate of the energy aware bit rate ladder representation; $EAR_j$ represents the $j^{th}$ resolution of the energy aware bit rate ladder representation; and $EAC_m$ represents the $m^{th}$ codec of the energy aware bit rate ladder representation.

The p representations of the M representations of convex-hull bitrate ladder ($p < M$) may be selected (e.g., to reduce video adaptative streaming energy consumption).

The choice of the applied method for the pruning may be done by the EABitrate ladder function itself or may be selected by the service provider. The possible methods proposed to the service provider are listed in Table 1.

Table 1: energy pruning method

| EAB pruning method value | energy pruning method |
|---|---|
| 0 | GlobalenergyThreshold_Method (GET acronym) |
| 1 | PerResolutionMaxenergyThreshold_Method (MET acronym) |
| 2 | PerResolutionCumulatedThreshold_Method (CT acronym) |
| 3 | PerResolutionQuantileThreshold_Method (QT acronym) |
| 4 | JndThreshold_Method (JT acronym) |
| 5..15 | Reserved for future uses |

A best effort mode may be applied to reach the energy reduction rate x%. If not possible to reach the modification (e.g., reduction), the higher possible reduction < x% may be targeted. pruning methods are described herein.

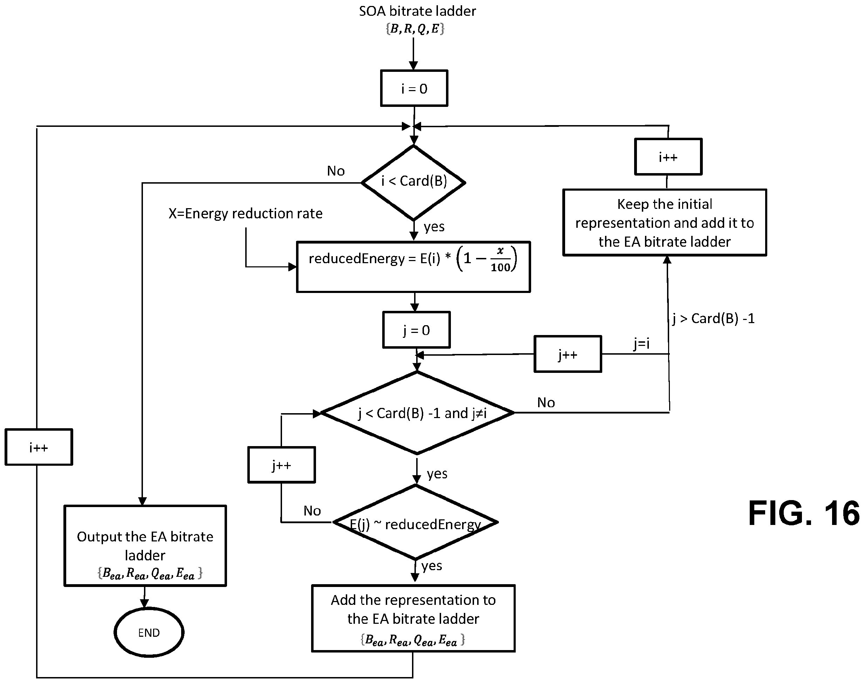

FIG. 16 illustrates an example energy pruning Globalenergy_Method algorithm method. The selected p representations from the convex hull bitrate ladder may have $Eeabitrateladder(t_n) = \sum_{k=\{R_i,B_j,C_m\}} E_{G|k}$ lower than

$$\left(1 - \frac{x}{100}\right) * \text{Eeabitrateladder}(t_{n-1})$$, by x=energy reduction rate. FIG. 16 describes the algorithm of the method.

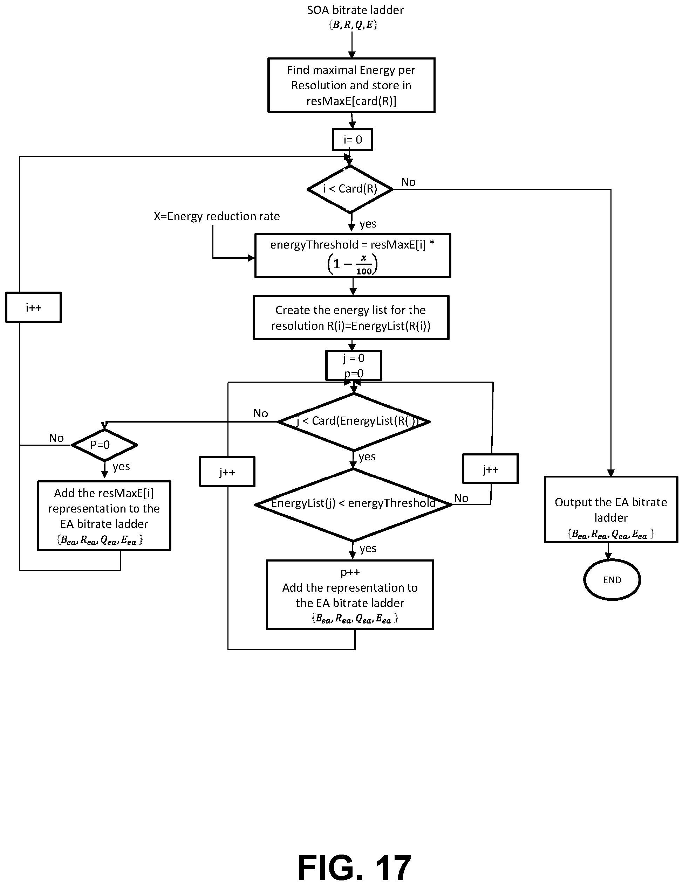

FIG. 17 illustrates an example energy pruning PerResolutionMaxenergyThreshold_Method algorithm. The p representations which, over the resolutions of the convex hull bitrate ladder may have for a same resolution $R_j$ an energy value lower than $\left(1 - \frac{x}{100}\right) \times \max E_{G|R_j}$ with x= energy reduction rate for resolution $R_j$. FIG. 17 describes the algorithm of the method.

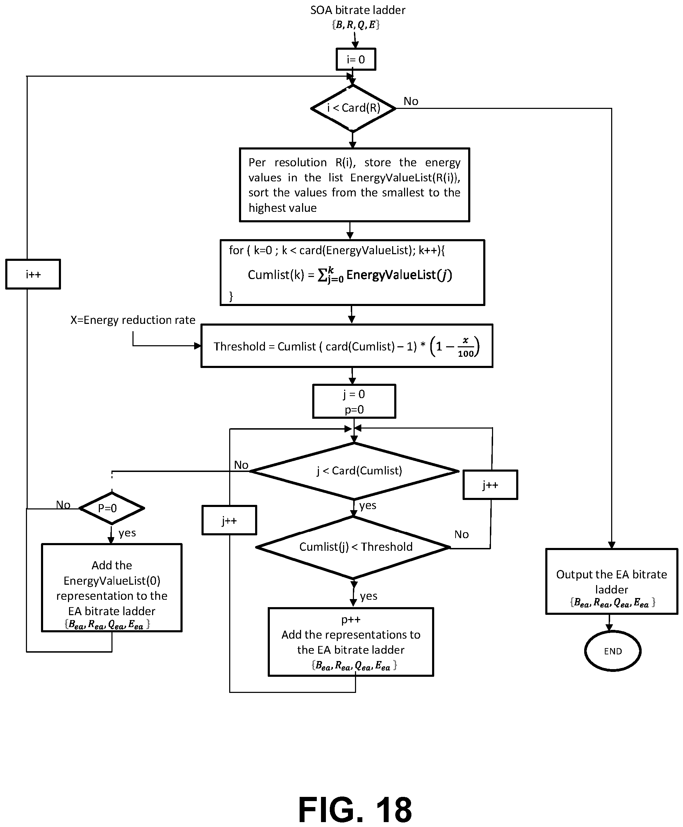

FIG. 18 illustrates an example energy pruning PerResolutionCumulatedThreshold_Method algorithm. The p representations which, over the resolutions of convex hull bitrate ladder, may have for a same resolution $R_j$ an energy value $\sum_{k=0}^{M_s} E_{G|R_j}$ lower than $\left(1 - \frac{x}{100}\right) \times \sum_{k=0}^{M} E_{G|R_j}$ with x= energy reduction rate for resolution $R_j$, $M_s$ the number of selected representations from the overall sorted (in ascending energy order) representations M of the convex hull bitrate ladder for the resolution $R_j$. FIG. 18 describes the algorithm of the method.

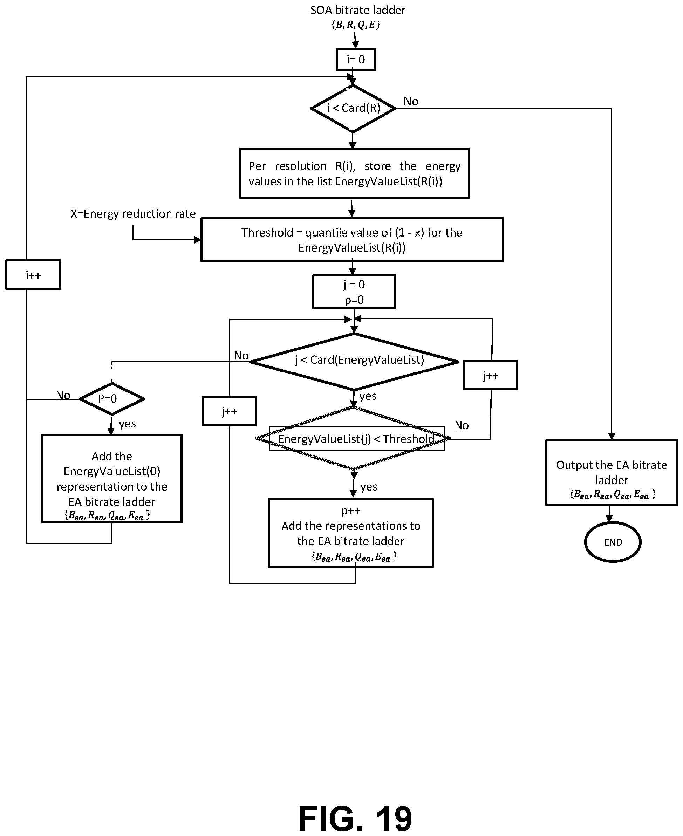

FIG. 19 illustrates an example energy pruning PerResolutionQuantileThreshold_Method algorithm. The p representations which, over the resolutions of convex hull bitrate ladder, may have for a same resolution $R_j$ a value $E_G$ lower than the quantile level of the $1 - \frac{x}{100}$ energy distribution of representations with a (e.g., same) resolution $R_j$ with x=energy reduction rate for resolution $R_j$. FIG. 19 describes the algorithm of the method.

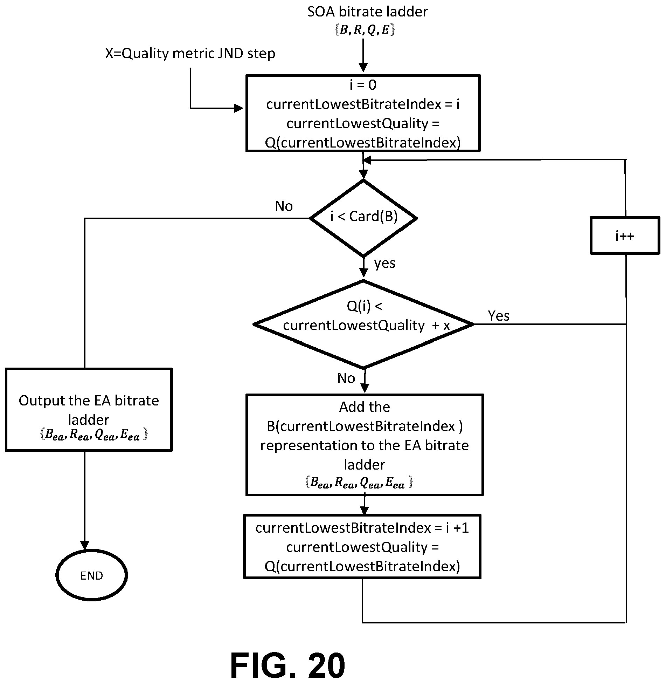

FIG. 20 illustrates an example energy pruning JND_Method algorithm. The p representations may have the smaller bitrate for a JND level. quality space may be divided into levels with a step size equal to a JND threshold described (e.g., defined) by the service provider per quality metric (e.g., VMAF 6 points, PSNR 0.5-1 dB). FIG. 20 describes the algorithm of the method.

The HAS server may receive a video content from the content provider at the time $t_n$ and proceed as described below:

$$E_G = \sum_{l=1}^{N} w_{f_{\theta l}} \times E_{f_{\theta l}}$$

The HAS server may compute the media content analytics, $F_c$ (e.g., Video Content Analytics (VCA)). The HAS server may get the lists of targeted bitrates, resolutions, and codecs from the service provider, and construct the convex hull bitrate ladder $\{B_j, R_j, Q_k\}$. The HAS server may estimate the global energy consumption of the adaptative streaming chain per representation, $E_G = \sum_{l=0}^{M} E_{f_{\theta l}}$, with l corresponding to the index of the distribution function of the streaming chain. The HAS server may generate, using the energy prediction function (as described herein), an intermediate bitrate ladder with energy parameter added $\{B_i, R_j, Q_k, E_k\}$. The HAS server may perform a pruning operation to skip representations to reach the energy reduction rate requested by the service provider.

The HAS server may generate an energy aware bitrate ladder $\{EAB_i, EAR_j, EAQ_k\}$ from $\{B_i, R_j, Q_k, E_k\}$. The sum of the p energy aware bitrate ladder representation (e.g., pair $\{B_i, R_j\}$) energy $\mathrm{Eeabitrateladder}(t_n) = \sum_{r=0}^{p} E_G(r)$ at the time $t_n$ may be reduced by the energy reduction rate in comparison with the one for the time $t_{n-1}$.

In examples, the service provider may specify a list of codecs (e.g., AVC, HEVC, VVC, and/or the like) to be considered by the energy prediction function to have mixed codec representations allowing to improve the pruning operation by the energy aware bitrate ladder constructor function when a codec is better, for a pair $\{B_i, R_j\}$ and for the same level of quality, than another to reduce the energy consumption. The estimation of the quality may be performed by using a pre-trained quality AI regression model (e.g., as described herein) in relation with the quality metric selected by the service provider. The default one is Y-PSNR quality metric. The energy prediction function may output the intermediate bitrate ladder $\{B'_i, R'_j, Q'_k, E_k, C_m\}$, and the energy aware bitrate ladder $\{EABi, EAR_j, EAQ, EAC_m\}$ may be generated.

In examples, the quality metric may be one of the following : PSNR, SSIM, wPSNR, WS-PSNR, and/or VMAF.

In examples, the energy prediction function (e.g., as described herein) may provide an energy per function $E_{f_{\theta k}}$ of the distribution chain. The function may output a vector of $E_{f_{\theta l}}$ energy value where k corresponds to the index of the function. The energy prediction function may output the intermediate bitrate ladder $\left\{B'_i, R'_j, Q'_k, V\left(E_{f_{\theta l}}\right), C_m\right\}$.

In examples, weights $w_{f_{\theta l}}$ may be applied to the energy value of a distribution function, and the energy for a representation is $E_G = \sum_{l=1}^{N} w_{f_{\theta l}} * E_{f_{\theta l}}$ in order to give a function $f_{\theta l}$ more influence on the result of the global energy. The energy prediction function may output the intermediate bitrate ladder $\{B'_i, R'_j, Q'_k, E_G, C_m\}$. If the weights are not provided by the service provider, the weights may be considered to be set to 1.

In examples, the input parameter quality reduction rate and an energy reduction rate may be 0, and the energy prediction function may be inactive and the tuple $\{B'_i, R'_j, Q'_k, E_G, C_m\}$ is not an output.

In examples, the pruning operation to skip representations by the energy aware bitrate ladder constructor function at the time $t_n$ may be performed by determining that $\mathrm{Eeabitrateladder}(t_n) = \sum_{k=\{R_i, B_j, C_m\}} E_{G|k}$ is lower than

$$\left(1 - \frac{x}{100}\right) * \mathrm{Eeabitrateladder}(t_{n-1})$$ , with x=energy reduction rate.

In examples, the pruning operation to skip representations by the energy aware bitrate ladder constructor function at the time $t_n$ and reach the energy reduction rate requested by the service provider may be done by selecting the representations with the same resolution $R_j$ and skip the ones which have a value of energy $E_{G|R_j}$ higher than

$$\left(1 - \frac{x}{100}\right) \times \max E_{G|R_j}$$ with x=energy reduction rate.

In examples, the pruning operation to skip representations by the energy aware bitrate ladder constructor function at the time $t_n$ and reach the energy reduction rate requested by the service provider may be done by selecting the representations with the same resolution $R_j$ and keep the ones $M_s$ which allows a value of energy

$$\mathrm{Eeabitrateladder}(t_n)(R_j) = \sum_{k=0}^{M_s} E_{G|R_j}$$ lower than

$$\mathrm{Eeabitrateladder}(t_{n-1})(R_j) = \left(1 - \frac{x}{100}\right) \times \sum_{k=0}^{M} E_{G|R_j}$$ with x=energy reduction rate and M the number of the representations of the original bitrate ladder.

In examples, the pruning operation to skip representations by the energy aware bitrate ladder constructor function at the time $t_n$ and reach the energy reduction rate requested by the service provider may be done by selecting the p representations with the same resolution $R_j$ and keep the ones with a value $E_{G|R_j}$ lower than the quantile level of the

$$1 - \frac{x}{100}$$ energy distribution of the p representations with x=energy reduction rate for resolution $R_j$.

In examples, the energy aware bitrate ladder constructor function may use just noticeable difference (JND) levels and, for a level, select the representations which have the smaller bitrate and the lowest quality while not impacting a quality of experience for the user.

In examples, a second energy pruning pass may be realized to optimize the bitrate ladder when after performing the first energy pruning pass (e.g., as described herein), the bitrate ladder remains a representation per resolution $R_j$, and

the representations prevent to reach the energy reduction rate requested by the service provider. An average reduction rate value may be computed from the energy reduction rate reached per resolution in the first pass. The computed energy reduction rate may be used by the methods used in the first pass and skipping following the criteria: let at least one representation per resolution.

In examples, the energy reduction rate requested by the service provider to perform the pruning operation, for examples defined herein, may be specified per resolution. The single energy reduction rate value may be replaced by a vector of energy reduction rate values with each value mapped to an element of the resolution list $R_j$.

In examples, the energy aware bitrate ladder constructor function may use a quality reduction rate and an energy reduction rate and find the best balancing in order to reduce the energy consumption.

In examples, the quality reduction rate and an energy reduction rate may be set to 0, and the energy aware bitrate ladder constructor function may output the bitrate ladder. The output energy aware bitrate ladder may be $\{EAB_i, EAR_j, EAC_m\}$, e. g., the same as $\{B_i, R_j, Q_k\}$.

In examples, the $\{EAB_i, EAR_j, EAC_m\}$ bitrate ladder may be generated per HAS time period Tm. The number n(Tm) and the selected representations may be updated from a period to another depending on the energy reduction strategy of the service provider.

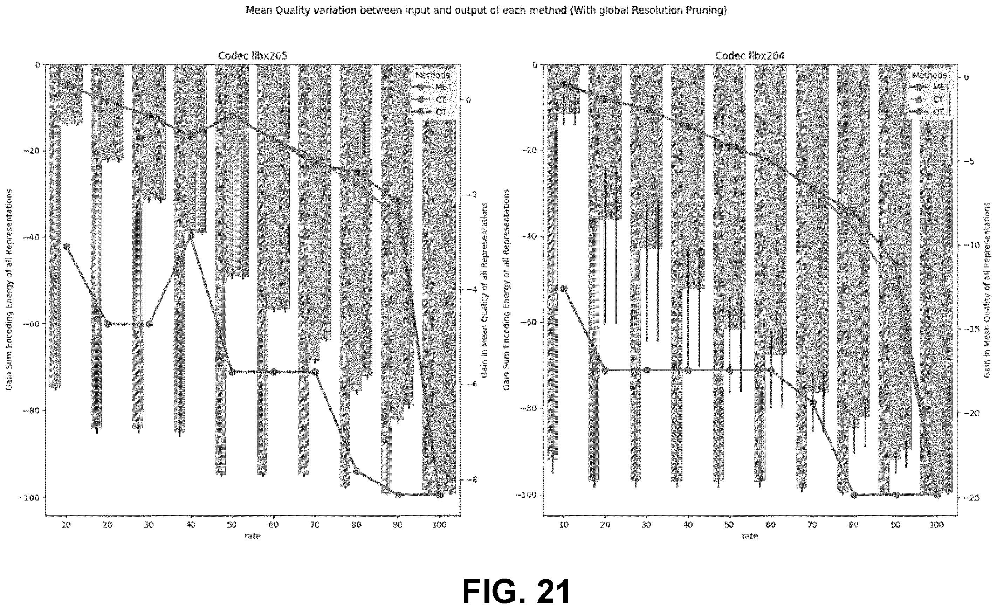

FIG. 21 illustrates an energy vs quality gain comparison between MET, CT and QT methods. FIG. 21 shows the energy gain of the 3 methods, three lines with MET (e.g., lower line beginning at -40 gain for x265 and ~-55 gain for x264), CT (e.g., line that begins to deviate at 60 rate in x265 and 70 rate in x264) and QT (e.g., upper line beginning at ~-5 gain for x265 and ~-5 gain for x264). FIG. 21 illustrates the quality distribution as 3 bar column with the same color meaning. The two codecs x264 and x265 have been tested.

Features described herein may be associated with an energy aware streaming server behavior. The server may be configured with two types of behaviors: no energy aware or energy aware. If the streaming server (e.g., based on the service provider's selection) is configured with the no energy aware behavior type for one of its video service (e.g., VOD or live), a (e.g., non-updated) behavior of the server may be applied. The tuple $\{EAB_i, EAR_j, EAC_m\}$ may be the same as the tuple $\{B_i, R_j, Q_k\}$ (e.g., see FIG. 6). In such a configuration, an energy prediction function may not be executed.

If an HAS streaming server behavior (e.g., based on the service provider's selection) is configured with aware type behavior, in addition to the other parameters, the service provider may provide an energy reduction rate parameter to request the HAS streaming server for an energy decrease action compared to non-updated bitrate ladder. An energy prediction function may be applied to predict the energy consumption of a video representation of the bitrate ladder, and an updated tuple $\{B_i, R_j, Q_k, E_k\}$ $\{B'_i, R'_j, Q'_k, E_k\}$ may be produced and transmitted to the energy aware bitrate ladder constructor function which creates an energy aware bit rate ladder $\{EAB_i, EAR_j\}$ using the energy threshold provided by the service provider. The $\{EAB_i, EAR_j\}$ bitrate ladder may be provided (e.g., transmitted) to the encoder to create the bitstream of a representation. The HAS manifest file may be updated accordingly (e.g., MPD manifest file), and an update event may be generated up to the HAS clients.

Features described herein may be associated with energy aware streaming client behavior. The HAS device (e.g., a HAS client) may be guided by the information provided in the MPD. The following is an example client behavior for streaming videos with an energy aware bitrate ladder created as described in this document.

An HAS device may issue an HTTP request and download the MPD file from a server (e.g., a content server). The client may parse the MPD file to generate a corresponding in-memory representation of the XML elements in the MPD file.

The HAS device may may identify an available video adaptation set (e.g., AdaptationSet) element in the current period. The HAS device may select a (e.g., one of) the available representations of the video adaptation set. The HAS device may select one of the representations based on its capabilities and the network conditions and download the initialization segment for that representation. The client may download (e.g., sequentially download) media segments associated with the selected video representation.

The client may monitor an update event associated with the MPD. The client may receive an updated MPD. In an example, the new updated MPD may be signaled by the HAS server based on HAS server architecture in relation with the energy reduction strategy of the service provider. The HAS device, based on the updated MPD, may perform actions described herein. For example, after selecting an updated video representation, the energy consumption of the overall adaptive streaming chain may be modified (e.g., increased or decreased). In an example, the energy consumption modification may be related to the decoding or rendering function of the HAS device.

Examples described herein may impact the HAS server system architecture and adaptive streaming functions. The generation and the update of the manifest file (e.g. MPD in dash) used by the client to select the asset representations of a service may be affected.

Examples described herein may be detected by tracking the update of the HAS manifest file on the client side device and observing a reduction/increase of the energy consumption of the device after switching to an (e.g., one of the) updated representations of the signaled manifest file.

For example, the decrease of the energy may be observed by measuring the energy consumption of the display associated with the device because examples described herein may adapt the video asset of a representation to reduce energy consumption of the video rendering.

Although features and elements are described above in particular combinations, one of ordinary skill in the art will appreciate that a feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, WTRU, terminal, base station, RNC, or any host computer.

**Claims**

1. A computing device, comprising:
a processor configured to:

   determine a plurality of tuples associated with a video, wherein each tuple comprises a respective image resolution and a respective bitrate associated with the video;
   predict, using an energy prediction machine learning (ML) model, a respective energy consumption associated with providing the video to a receiving device at the image resolution and the bitrate comprised in each of the plurality of tuples;
   select one or more tuples from the plurality of tuples based at least on the respective energy consumptions predicted for the plurality of tuples; and
   convey information regarding the one or more selected tuples to a video encoder.

2. The computing device of claim 1, wherein the computing device comprises the video encoder.

3. The computing device of claim 1 or claim 2, wherein the respective energy consumption predicted for each of the plurality of tuples comprises a first energy consumption and a second energy consumption, the first energy consumption associated with a first function performed during the provision of the video, the second energy consumption associated with a second function performed during the provision of the video.

4. The computing device of claim 3, wherein the first function is associated with encoding the video at the image resolution and the bitrate comprised in each of the plurality of tuples, and wherein the second function is associated with decoding the video at the image resolution and the bitrate comprised in each of the plurality of tuples.

5. The computing device of claim 3, wherein the respective energy consumption predicted for each of the plurality of tuples is determined as a sum or a weighted sum of at least the first energy consumption and the second energy consumption.

6. The computing device of claim 5, wherein the processor is further configured to determine respective weights applied to the first energy consumption and the second energy consumption.

7. The computer device of any of claims 1-6, wherein each of the plurality of tuples further indicates a respective encoding technique or a respective decoding technique associated with the provision of the video, and wherein the processor is configured to predict the respective energy consumption associated with each of the plurality of tuples further based on the respective encoding technique or the respective decoding technique indicated by each of the plurality of tuples.

8. The computing device of any of claims 1-7, wherein the processor is further configured to determine content features associated with the video and predict the respective energy consumption associated with each of the plurality of tuples further based on the content features.

9. The computer device of any of claims 1-8, wherein the processor is further configured to determine a respective quality metric associated with each of the plurality of tuples, and select the one or more tuples from the plurality of tuples based further on the respective quality metric associated with each of the plurality of tuples.

10. The computing device of claim 9, wherein the processor is configured to determine the respective quality metric associated with each of the plurality of tuples using an ML model trained for making the determination based at least on the respective image resolution and the respective bitrate associated with each of the plurality of tuples.

11. The computing device of any of claims 1-10, wherein the processor is configured to select the one or more tuples from the plurality of tuples based on a determination that the respective energy consumption predicted for each of the one or more tuples satisfies an energy reduction rate.

12. The computing device of claim 11, wherein the processor is configured to determine that the one or more tuples satisfy the energy reduction rate based on energy consumptions associated with the one or more tuples at different points in time, based on respective maximum energy consumptions associated with the same image resolutions as those comprised in the one or more tuples, based on a sorted list or a distribution of energy consumptions associated with the same image resolutions as those comprised in the one or more tuples, or based on a just-noticeable-difference (JND) associated with the respective energy consumptions predicted for the one or more tuples.

13. A method, comprising:

determining a plurality of tuples associated with a video, wherein each tuple comprises a respective image resolution and a respective bitrate associated with the video;
predicting, using an energy prediction machine learning (ML) model, a respective energy consumption associated with providing the video to a receiving device at the image resolution and the bitrate comprised in each of the plurality of tuples;
selecting one or more tuples from the plurality of tuples based at least on the respective energy consumption associated with providing the video at the image resolution and the bitrate comprised in each of the plurality of tuples; and
conveying information regarding the one or more selected tuples to a video encoder.

14. The method of claim 13, wherein the respective energy consumption predicted for each of the plurality of tuples comprises a sum of at least a first energy consumption and a second energy consumption, the first energy consumption associated with a first function performed during the provision of the video, the second energy consumption associated with a second function performed during the provision of the video.

15. A video decoding device, comprising:
a processor configured to:

receive, from a server, a first media presentation descriptor (MPD) manifest file associated with a video, wherein the first MPD manifest file indicates a first representation of the video that is associated with a first image resolution or a first bitrate;
decode the first representation of the video based on the first MPD manifest file;
receive, from the server, a second MPD manifest file associated with the video, wherein the second MPD manifest file indicates a second representation of the video that is associated with a second image resolution or a second bitrate, and wherein the second MPD manifest file is received as a result of the server determining that the second representation of video consumes less energy than the first representation of the video; and
decode the second representation of the video based on the second MPD manifest file.

**FIG. 1A**

116

102

122

| | 120 Transceiver | |
| --- | --- | --- |
| 124 Speaker/ Microphone | | 134 Power Source |
| 126 Keypad | 118 Processor | 136 GPS Chipset |
| 128 Display/ Touchpad | | 138 Peripherals |

130 Non-Removable Memory

132 Removable Memory

# FIG. 1B

**FIG. 1C**

**FIG. 1D**

116

116

116

102a

102b

102c

113
RAN

116

N2

180a
gNB

N3

Xn

N2

180b
gNB

N3

Xn

N2

180c
gNB

N3

115
Core Network

182a
AMF

N11

183a
SMF

N4

184a
UPF

N6

185a
DN

182b
AMF

N11

183b
SMF

N4

184b
UPF

N6

185b
DN

108
PSTN

110
Internet

112
Other
Networks

FIG. 2

**300**

**FIG. 3**

**400**

**FIG. 4**

FIG. 5

**Media Presentation Description**

Period ID = 1
Start = 0
seconds
...

Period ID = 2
Start = 60
seconds
...

Period ID = 3
Start = 120
seconds
...

Period ID = 2
Start = 60 seconds

Adaptati
on
set 0

Adaptati
on
set 1

Adaptati
on
set 2

Adaptation set 1

Representati
on 1
5 Mbps

Representati
on 2
2 Mbps

Representati
on 3
0.5 Mbps

Representation 2
2Mbps

Segment
info

Segment info
Duration = 60 seconds

Initialization
segment
http://ex.com/il.m
p4

Media segment 1
Start = 0 seconds
http://ex.com/v1.
mp4

Media segment 2
Start = 15 seconds
http://ex.com/v2.
mp4

Media segment 3
Start = 30 seconds
http://ex.com/v3.
mp4

Media segment 4
Start = 45 seconds
http://ex.com/v4.
mp4

**FIG. 6**

FIG. 7

FIG. 8

FIG. 9

**FIG. 10**

EP 4 718 842 A1

**FIG. 11**

EP 4 718 842 A1

PQ_PSNR_Y

true
pred

**FIG. 12**

**FIG. 13**

AVC

HEVC

VVC

FIG. 14

**FIG. 15**

EP 4 718 842 A1

EP 4 718 842 A1

SOA bitrate ladder
$\{B, R, Q, E\}$

$i = 0$

$i < \text{Card}(B)$ — No

X=Energy reduction rate

yes

$$\text{reducedEnergy} = E(i) * \left(1 - \frac{x}{100}\right)$$

$j = 0$

$j < \text{Card}(B) - 1 \text{ and } j \neq i$ — No

yes

$E(j) \sim \text{reducedEnergy}$ — No

yes

Add the representation to
the EA bitrate ladder
$\{B_{ea}, R_{ea}, Q_{ea}, E_{ea}\}$

j++

j++

$j = i$

$j > \text{Card}(B) - 1$

i++

Keep the initial
representation and add it to
the EA bitrate ladder

i++

Output the EA bitrate
ladder
$\{B_{ea}, R_{ea}, Q_{ea}, E_{ea}\}$

END

**FIG. 16**

SOA bitrate ladder
$\{B, R, Q, E\}$

Find maximal Energy per
Resolution and store in
resMaxE[card(R)]

i= 0

i < Card(R) — No

yes

X=Energy reduction rate

energyThreshold = resMaxE[i] *
$\left(1 - \frac{x}{100}\right)$

Create the energy list for the
resolution R(i)=EnergyList(R(i))

j = 0
p=0

j < Card(EnergyList(R(i))) — No

yes

i++

j++

j++

No — P=0

yes

Add the resMaxE[i]
representation to the
EA bitrate ladder
$\{B_{ea}, R_{ea}, Q_{ea}, E_{ea}\}$

EnergyList(j) < energyThreshold — No

yes

p++
Add the representation to
the EA bitrate ladder
$\{B_{ea}, R_{ea}, Q_{ea}, E_{ea}\}$

Output the EA bitrate
ladder
$\{B_{ea}, R_{ea}, Q_{ea}, E_{ea}\}$

END

# FIG. 17

**FIG. 18**

**FIG. 19**

EP 4 718 842 A1

SOA bitrate ladder
$\{B, R, Q, E\}$

X=Quality metric JND step

```
i = 0
currentLowestBitrateIndex = i
currentLowestQuality =
Q(currentLowestBitrateIndex)
```

i < Card(B)

No

yes

i++

Q(i) <
currentLowestQuality + x

Yes

No

Output the EA bitrate
ladder
$\{B_{ea}, R_{ea}, Q_{ea}, E_{ea}\}$

Add the
B(currentLowestBitrateIndex )
representation to the EA bitrate
ladder
$\{B_{ea}, R_{ea}, Q_{ea}, E_{ea}\}$

END

```
currentLowestBitrateIndex = i +1
currentLowestQuality =
Q(currentLowestBitrateIndex)
```

# FIG. 20

Mean Quality variation between input and output of each method (With global Resolution Pruning)

FIG. 21

## EUROPEAN SEARCH REPORT

**Application Number**

EP 24 30 6606

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AZIMI ZOHA ET AL: "Towards ML-Driven Video Encoding Parameter Selection for Quality and Energy Optimization", 2024 16TH INTERNATIONAL CONFERENCE ON QUALITY OF MULTIMEDIA EXPERIENCE (QOMEX), IEEE, 18 June 2024 (2024-06-18), pages 80-83, XP034648330, DOI: 10.1109/QOMEX61742.2024.10598278 [retrieved on 2024-07-22] * abstract; figure 1 * * Sections I-III * ----- | 1-15 | INV. H04N19/115 H04N19/14 H04N19/156 |
| A | MULLER CHRISTOPH ET AL: "Towards Sustainable Video Streaming: Evaluation of AI Approaches for Content Aware Encoding", 2023 INTERNATIONAL CONFERENCE ON ELECTRICAL, COMPUTER AND ENERGY TECHNOLOGIES (ICECET), IEEE, 16 November 2023 (2023-11-16), pages 1-4, XP034521585, DOI: 10.1109/ICECET58911.2023.10389538 [retrieved on 2024-01-22] * abstract * * Sections IV and VI * ----- | 1-15 | |

TECHNICAL FIELDS SEARCHED (IPC)

H04N

-/--

The present search report has been drawn up for all claims

| Place of search | Date of completion of the search | Examiner |
|---|---|---|
| The Hague | 19 February 2025 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Application Number

EP 24 30 6606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TURKKAN BEKIR OGUZHAN BEKIROGU@BUFFALO EDU ET AL: "GreenABR energy-aware adaptive bitrate streaming with deep reinforcement learning", PROCEEDINGS OF THE 13TH ACM INTERNATIONAL CONFERENCE ON BIOINFORMATICS, COMPUTATIONAL BIOLOGY AND HEALTH INFORMATICS, ACMPUB27, NEW YORK, NY, USA, 14 June 2022 (2022-06-14), pages 150-163, XP058802231, DOI: 10.1145/3524273.3528188 ISBN: 978-1-4503-9682-0 * abstract; figure 2 * * Sections 1, 3, 4 * | 1-15 | |
| A | REZA FARAHANI ET AL: "Towards AI-Assisted Sustainable Adaptive Video Streaming Systems: Tutorial and Survey", ARXIV.ORG, CORNELL UNIVERSITY LIBRARY, 201 OLIN LIBRARY CORNELL UNIVERSITY ITHACA, NY 14853, 4 June 2024 (2024-06-04), XP091778206, * abstract; table 1 * * Sections 3.4.2 and 4.1.2 * | 1-15 | TECHNICAL FIELDS SEARCHED (IPC) |

The present search report has been drawn up for all claims

| Place of search | Date of completion of the search | Examiner |
|---|---|---|
| The Hague | 19 February 2025 | Streich, Sebastian |